# EUROPEAN PATENT SPECIFICATION

(11) **EP 2 338 097 B1**
(45) Date of publication and mention of the grant of the patent: **27.03.2013**
(21) Application number: 09786358.3
(22) Date of filing: 03.04.2009
(51) Int. Cl.: G06F 3/023

(54) **KEYPAD AND ELECTRONIC APPARATUS FOR REMOVING LANGUAGE VARIANCE**
TASTENFELD UND ELEKTRONISCHE VORRICHTUNG ZUR ENTFERNUNG VON SPRACHENVARIANZ
CLAVIER ET APPAREIL ÉLECTRONIQUE SERVANT À SUPPRIMER UNE VARIANCE DE LANGAGE

(30) Priority: 12.09.2008 CN 200810213111
(43) Date of publication of application: 29.06.2011
(73) Proprietor: Sony Ericsson Mobile Communications AB, 221 88 Lund (SE); Gao, Feng, Beijing 100102 (CN)
(72) Inventor: GAO, Feng, Beijing 100102 (CN)
(74) Representative: Ström & Gulliksson AB
(86) International application number: PCT/IB2009/051404
(87) International publication number: WO 2010/029448

(56) References cited:
- US-A1- 2003 184 451
- US-A1- 2007 057 917
- US-B1- 6 307 541

## Description

### Technical field

The present invention relates to a keypad of an electronic apparatus, and more particularly, to a keypad of a portable mobile terminal for removing language variances through transfer from a physical keypad to a virtual keypad, and an electronic apparatus incorporating such a keypad.

### Background Art

With the rapid development of science and technology in recent years, various such electronic apparatuses as portable computers and personal digital assistants (PDAs) etc. become indispensable everyday tools of people. In order to enhance competitiveness, every manufacturer expects to increase production efficiency and lower production cost as much as practically possible.

It has been common practice to integrate the local language of the user to the keypad of such miniature mobile terminals as mobile phones and PDAs due to restrictions of inputting methods. However, under the current background of commercial globalization, electronic products of the same type are usually sold in many countries, so that it is necessary to design and produce various keypads with regard to different languages for the electronic products of the same type because of different locales (especially different countries) and user groups to which the products are to be sold. There are usually tens of types of such keypads.

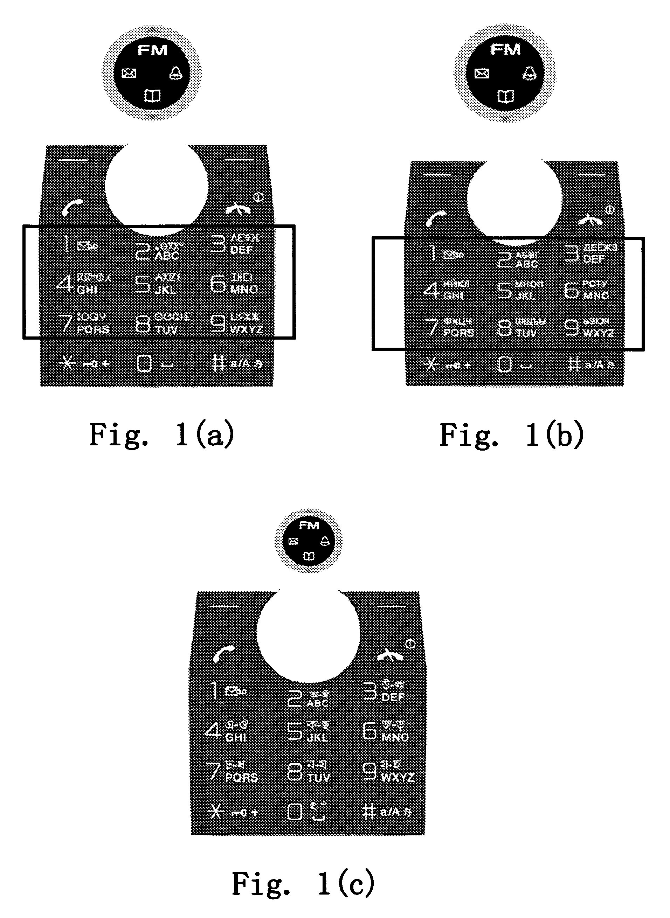

First take for example a keypad conventionally seen in the prior art, such as the mobile phone keypad illustrated with reference to Fig. 1. Most mobile phone keypads have 12 keys on the keypad interface as standardized according to the International Telephone and Telegraph Consultative Committee (CCITT), namely numerals 0-9 and symbols "*" and "#", and such control keys as shift up, shift down, shift left and shift right, enter, cancel, and the like; also included may be such function keys or hot keys as dedicated to short messages, FM radio, electronic book reading, alarm clock, games, Emails, and so on. Latin alphabets and local languages (local alphabets or local strokes) are mainly distributed on numeral keys 1-9, and may also be distributed on numeral keys 0-9 for certain languages.

Accordingly, the inconsistency with regard to different languages for the same type of mobile phones is substantially reflected on the nine keys concentrated in the rectangular frame as shown in Fig. 1, namely numeral keys 1-9, or numeral keys 0-9. The configuration of the keypad for the nine keys in the rectangular frame is "Arabic numerals + Latin alphabets + local language". For instance, Fig. 1 (a) illustrates a keypad dedicated to Tamazight users, Fig. 1 (b) illustrates a keypad dedicated to Cyrillic users, and Fig. 1 (c) illustrates a keypad dedicated to Bengali users.

It is clear that linguistic distinctions are mainly reflected in the physical keypads for electronic products of the same type. Such distinctions necessitate a single electronic apparatus to correspond to plural types of keypads, and this is not only disadvantageous for materials management, but also increases industrial design procedures, complicates manufacturing process, lowers production efficiency and enhances production cost.

If we can remove such variances on the physical keypad as brought about by differences in languages and users, i.e. if we can make it possible to use the same physical keypad with regard to different languages and users, it might well be possible to simplify materials management and unify design and manufacturing process, and thus possible to sell electronic products of the same type in many countries and regions without specific design and manufacture of physical keypads for each of the different sales places, thereby markedly enhancing production efficiency, lowering production cost, and making more room for maneuverability for sale.

There has been a solution of a virtual keypad in the state of the art, whereby the virtual keypad is displayed on a touch screen as a supplement to the physical keypad by compilations through touching operations. But such a virtual keypad is usually thus arranged as to repeat the arrangement mode of the physical keypad or arranged as a computer keyboard is arranged, and it does not simplify the original physical keypad or is not unified with regard to different languages. Moreover, since the touch screen is slow in reaction speed, the operational speed in the prior art case of entirely replacing the physical keypad with the virtual keypad is lowered, and this is especially so in a miniature electronic apparatus where the relatively smaller screen area necessitates smaller keys and closer arrangement of the keys, thereby rendering operation even inconvenient.

US-B1-6 307 541 discloses a Chinese-character input method and system to allow users to input Chinese characters to a data processor with a reduced keyboard, such as a mobile-phone handset with a CCITT-compliant (Consultative Committee in International Telegraphy and Telephony) keyboard having only 12 keys. The Chinese-character input method and system allow the user to input Chinese characters to the data processor through a plurality of virtual keyboards which collectively display a set of phonetic symbols, such as those in the Mandarin Phonetic Symbol Set or the Roman Symbol Set. Hence, the user can perform the input operation through a pronunciation-based input scheme. The Chinese-character input method and system arrange the virtual keyboards in relational layers in accordance with the Mandarin Phonetic-Symbol Combination Rules or the Chinese Roman-Symbol Combination Rules, so that the user can perform the task of Chinese-character input to the data processor more conveniently and efficiently than in the prior art.

Similar devices are shown in US 2003/184451 and US2007/057917.

We hope to acquire a keypad of an electronic apparatus with enhanced operational speed, simplified operational mode and user-friendlier performance.

### Summary of the Invention

One objective of the present invention is to provide a keypad of an electronic apparatus that removes language variances and satisfies different demands on inputting languages in different regions and by different users.

Another objective of the present invention is to make it possible to produce only one type of keypad for electronic apparatuses of the same type with regard to different regions and users, to thereby lower production cost.

A further objective of the present invention is to provide a keypad of an electronic apparatus with faster operational speed and simpler operational mood.

Still another objective of the present invention is to provide an electronic apparatus having a keypad removed of language variances.

Yet another objective of the present invention is to provide a method for removing language variances from a keypad of an electronic apparatus.

According to one aspect of the present invention, there is provided a keypad for an electronic apparatus, which keypad has a display section and a keying section, wherein the display section displays a specific language part, and the keying section includes a plurality of keys, at least one of which is operable corresponding to the specific language part.

The plurality of keys have their own marks including a numeral part, a basic language part and other control key part.

The numeral part can be an Arabic numeral part.

The basic language part can be a Latin alphabet part.

The display section further displays display section numeral parts corresponding to the numeral parts on the plurality of keys.

The specific language part can include local linguistic alphabets and/or local linguistic strokes of a user of the electronic apparatus.

The display section can be distributed in a rectangular region corresponding to the keying section.

The display section can be invoked when the user of the electronic apparatus desires to input the specific language.

When invoked, the display section can be displayed on a display screen of the electronic apparatus, or displayed on other display means associated with the electronic apparatus, such as a display screen of a computer connected to the electronic apparatus or a projected picture associated with the electronic apparatus.

Moreover, the display screen, which displays the display section, of the electronic apparatus can be a separate display screen independent of a display screen that displays compiled content of the keypad.

The keying section can be realized by a physical keypad.

The keypad for an electronic apparatus according to the present invention removes language variances through transfer from a physical keypad to a virtual keypad and through combined use of the two, namely it removes variances on the physical keypad as brought about by differences in compiling languages of the electronic apparatus as demanded in different regions and by different users.

An electronic apparatus having the same and single physical keypad can be used with regard to users of the electronic apparatus of different regions and different languages. When it is needed to compile a specific language, especially one to which the physical keypad does not correspond, the display section of the keypad is driven by internal component parts of the electronic apparatus, and the display section is displayed on the display screen of the electronic apparatus or other employable display means. Compilation of the local language or a desired language is achieved through combination of the virtual keypad with the physical keypad.

Unification of the physical keypad markedly simplifies design contents and manufacturing processes of the electronic apparatuses of the same type. It is unnecessary to specifically design and manufacture physical keypads for various languages even with regard to markets of different languages in different regions, as what is needed is only to load appropriate language component parts in the electronic apparatus. Such loading procedure can be carried out by the manufacturer before the product goes out of the factory, or by the seller before sales, or even by the user him/herself after sales.

Consequently, the manufacturing process of the electronic apparatus is simplified, the production efficiency is enhanced, and the cost is also effectively controlled. Moreover, sale is made more adaptive and more flexible, and transfer of goods between different regions is facilitated.

When the display section of the keypad is distributed corresponding to the numeral parts of the keying section, the numeral parts can be utilized as positioning marks indicative of language keys on the display section, thereby rendering operation of the keypad according to the present invention more visually direct.

Direct use of the physical keypad itself of the electronic apparatus as the keying section to operate the display section of the keypad also makes simpler the operation of the keypad according to the present invention.

It is possible to arrange the keying section and the display section in a stacked manner, in which case a one-to-one corresponding keying arrangement is employed to operate the keypad via the keying section, thereby greatly enhancing the operational speed, hand feel and convenience of the keypad as compared with traditional touch screen operation.

Especially, when the arrangement of the virtual keypad as displayed by the display section is consistent with the physical keypad with the local language in the prior art, the cost for the user to learn is very low. Such an electronic apparatus brings about significant convenience to the use of the user.

According to another aspect of the present invention, there is provided an electronic apparatus having a display screen and a physical keypad, which includes a numeral part, a basic language part and other control key part; the electronic apparatus further comprises a virtual keypad including a specific language part, wherein when the virtual keypad is invoked, the virtual keypad is displayed on the display screen.

The electronic apparatus can also comprise a selection section, a reception section, a calculation section, a storage section, and a display control section.

According to still another aspect of the present invention, there is provided an electronic apparatus having a keypad as mentioned above.

The electronic apparatus can also comprise a selection section, a reception section, a calculation section, a storage section, and a display control section.

According to yet another aspect of the present invention, there is provided a method for removing language variances from a keypad for an electronic apparatus, which method comprises the steps of: producing a keying section having a plurality of keys; integrating components for generating display on a display section to an operating system of the electronic apparatus, which the display section displays alphabets and/or strokes of a specific language; and invoking the display section, and using at least one key of the plurality of keys to operate, so as to input the specific language.

Similar effects and advantages achievable by the aforementioned keypad for an electronic apparatus can be achieved by the aforementioned electronic apparatus or the aforementioned method for removing language variances from a keypad for an electronic apparatus as well.

These and other features of the present invention are clearly comprehensible through the explanation and drawings that follow. Some specific embodiments of the present invention are illustrated in detail in the Description and the accompanying drawings, so as to make comprehensible the mode of the principle by which the present invention is implemented. As should be understood, however, the scope of the present invention is not defined by these embodiments on a one-by-one basis.

Features described or illustrated in the following specific embodiments can be used in one or more other modes of execution in an identical or similar manner to combine the features in these embodiments or replace certain features of these embodiments.

As should be stressed, terms "comprising"/ "including" are used to indicate the existence of the features, steps or component parts as described, but they should not be understood to exclude the existence of other features, steps, component parts or combinations thereof.

Features and advantages of the present invention become more apparent through the detailed description below with reference to the accompanying drawings, in which essentials and features as illustrated in one figure are combinable with essentials and features as illustrated in other figures. In addition, identical or similar reference numerals indicate identical or similar essentials throughout the drawings.

### Description of Drawings

Fig. 1 illustrates a keypad for an electronic apparatus incorporating the local language according to the prior art;
Fig. 2 illustrates the structure of an electronic apparatus according to the embodiments of the present invention;
Fig. 3 illustrates a physical keypad of the electronic apparatus according to the embodiments of the present invention;
Fig. 4 illustrates the circumstance when the display section is invoked;
Fig. 5 illustrates a Chinese virtual keypad corresponding to the physical keypad of the electronic apparatus;
Fig. 6 illustrates another Chinese virtual keypad corresponding to a mini-keyboard of a computer;
Fig. 7 (a) illustrates an initial position of a transparent physical keypad; and
Fig. 7 (b) illustrates a position where the transparent physical keypad is used in combination with a virtual keypad.

### Detailed Description of the Invention

The electronic apparatus referred to in the present invention can be a portable mobile terminal such as a mobile phone, a PDA, and so on.

Preferred embodiments of the present invention are described in greater detail below with reference to the accompanying drawings.

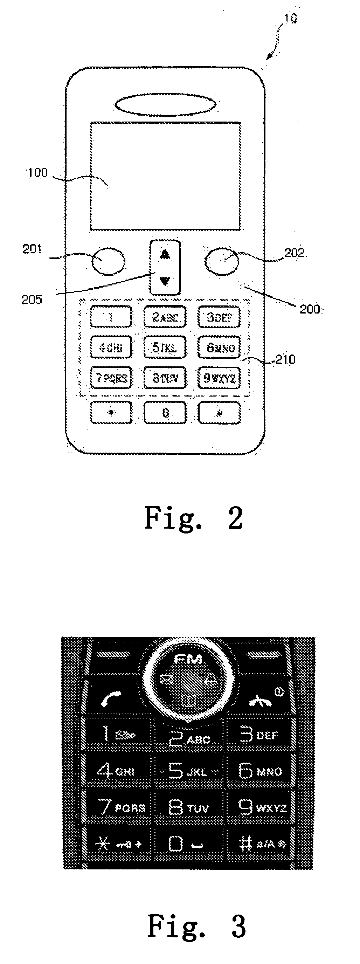

Fig. 2 illustrates the appearance structure of an electronic apparatus according to the embodiments of the present invention. As shown in Fig. 2, the electronic apparatus (mobile phone) 10 according to the preferred embodiments of the present invention comprises a display screen 100 and a physical keypad 200, of which the display screen 100 can be a monochromatic STN (MSTN), a color STN (CSTN), a color TFT (α -Si and LTPS), a monochromatic and polychromatic OLED, a color OLED (including passive matrix PM-OLED and active matrix driven AM-OLED) etc.

The physical keypad 200 includes cancel and enter keys 201, 202, shift key 205, "*" key, "#" key, and a numeral part as well as a basic language part. Optionally, further included therein may also be such function keys or hot keys for short messages, calendar, mp3 playing, and a photographing head etc. The numeral part can include ten Arabic numeral keys from 0 to 9. The basic language part includes basic constituents (namely alphabets and/or strokes) of a basic language, such as the twenty six Latin alphabets from A to Z. The twenty six Latin alphabets can be sequentially distributed on the numeral keys, and they are usually distributed on the eight keys from 2 to 9 as shown in Fig. 3.

Usually, different physical keypads are used on mobile phones with regard to different local languages and different user demands, and these are referred to in the present invention as "language variances". In order that a mobile phone having distinctive linguistic demands is kept consistent in terms of its physical keypad, the physical keypad of the mobile phone according to the present invention does not include a specific language part, that is to say, no corresponding alphabets and/or strokes are tailor-made onto the keys of the physical keypad in accordance with languages of different regions.

Under such a circumstance, in order to satisfy the different needs of different regions and different users on the inputted languages, the specific language part of the keypad of the mobile phone in the prior art is realized by means of a virtual keypad. A specific language of the specific language part indicates a language that is different from that of the basic language part, and it can be the local language or a language needed by the user, such as Chinese strokes, Greek alphabets, Cyrillic alphabets, Bengali alphabets, Tamazight alphabets, Korean alphabets, or Japanese kanas, etc.

In other words, in view that the mobile phone keypad of the prior art usually includes numeral keys, Latin alphabet keys and local language keys, and that the distinction of keypads of mobile phones of the same type is mainly reflected in the local language keys, the mobile phone keypad of the prior art is correspondingly divided into two portions according to the present invention, whereby the same parts, namely the numeral part and the Latin alphabet part, are still disposed on the physical keypad as the keying section, whereas the different part, which is usually the local language part, is represented on the virtual keypad as the display section.

Thus, what the language remains on the physical keypad is only the Latin alphabet part, so that there is no variance any more on the physical keypads of mobile phones of the same type.

The display section can also display indication keys that correspond to the keys of the specific language part, functioning to mark operations of the user. Such indication keys can be numeral keys, for instance Arabic numeral keys commonly seen in physical keypads; especially when the virtual keypad as displayed by the display section is arranged and distributed to correspond to the physical keypad, numeral keys consistent with those on the physical keypad are retained. In such a circumstance, the contents displayed by the display section are numerals and alphabets of the local language.

The virtual keypad can be correspondingly arranged according to current conventions by which alphabets or strokes are used to thereby effectively lower the learning cost of the user and make it easy for the user to accept and use in relative proficiency the inputting mode of the novel keypad.

As shown in Figs, 4, 5 and 6, when it is needed for the user of the mobile phone to compile linguistic input, the display section can be initiated and the virtual language keypad can be invoked.

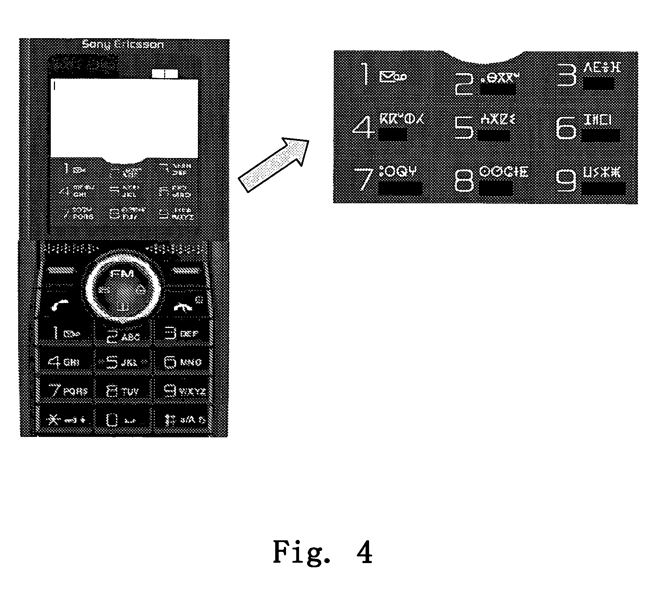

When the display section is initiated, it can be displayed on the display screen of the mobile phone. At this time the display screen of the mobile phone can be divided into two portions, for instance, an upper portion and a lower portion, or a left portion and a right portion, of which one portion displays the virtual keypad while the other portion displays the contents of the compiled language. A common division is shown in Fig. 4, where the lower portion displays the virtual keypad and the upper portion displays the compiled contents.

### [First Embodiment]

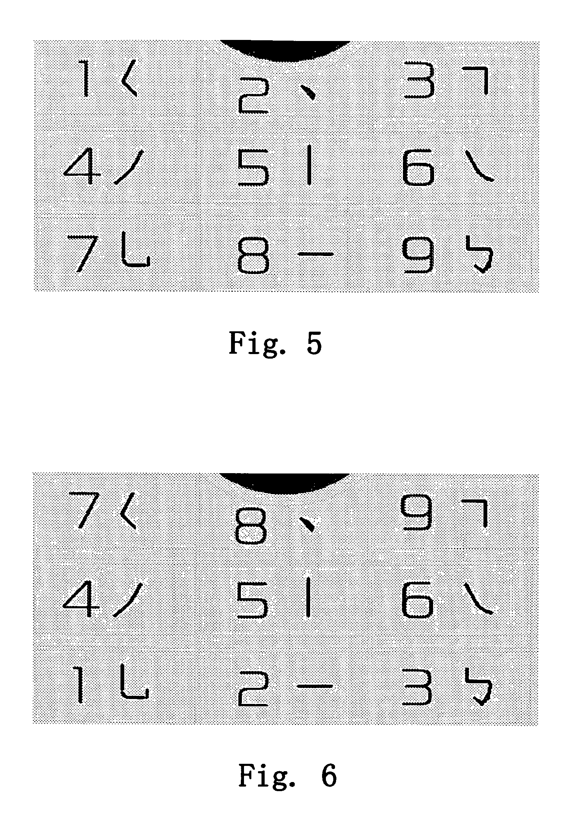

Fig. 5 illustrates a circumstance of a Chinese virtual keypad corresponding to the physical keypad of the mobile phone.

When the user intends to compile the Chinese language, the corresponding function is selected from a menu of the mobile phone, and the display section is initiated to display the Chinese virtual keypad.

The Chinese virtual keypad displayed at the lower portion of the display screen of the mobile phone includes nine stroke keys, namely "∠", " 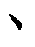 '", "┐", ", " 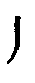 ", " | ", " 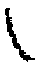 "," L", "―" and " 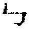 ", which are arranged as 3X3 and respectively correspond to the Arabic numeral keys 1-9.

If the user performs input operation with the physical keypad, corresponding keys on the physical keypad are pressed according to the correlation with the Arabic numerals.

For instance, if the Chinese character " 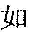 " is to be inputted, the user sequentially presses the physical keys marked with "1 ", "4", "8", "5", "3", "8", and this is equivalent to performing operations on the strokes "∠", " 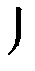 ", "—", " | ", " ┐ " and "—" in the display section to sequentially input these strokes, thus forming the character " 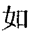 ".

### [Second Embodiment]

Fig. 6 illustrates another circumstance of the Chinese virtual keypad.

In the case the user performs input operation with a keyboard of a computer connected to the mobile phone, since the arrangement of the computer keyboard is different from that of the mobile phone keypad, the virtual keypad can be displayed according to the arrangement of the computer keyboard when the display section is invoked, in order that the operation is made easier. For instance, the virtual keypad can be displayed according to the arrangement of the mini-keyboard of the computer (numeral keyboard) as shown in Fig. 6.

At this time, if the Chinese character " 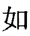 " is to be inputted, keys "7", "4", "2", "5", "9", "8" on the computer mini-keyboard are sequentially pressed so that the strokes "∠", " 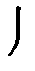 ", "—", " | ", "┐ " and "—" are sequentially keyed in to form the character " 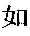 ".

The display section in the present invention can be driven by software tailor-made on demand of users according to different regions and languages. The software can be installed by the manufacturer at a final assembly process before the electronic apparatus comes out of the factory, or by the seller before sales to the user, or even by the user him/herself after purchase of the electronic apparatus according to his or her own need.

Moreover, updating or loading of new software can alter or expand the language compiling function of electronic apparatuses of the same type. It is possible thus in principle for electronic apparatuses of the same type to adapt to compilation of any language insofar the software supports. The keypad can adapt to the need of compiling plural languages in the case of a single electronic apparatus.

The display section in the present invention can be operated by means of the physical keypad of the electronic apparatus as the keying section. Numeral keys on the virtual keypad consistent with those on the physical keypad as displayed on the display section can function to indicate input.

When the virtual keypad is operated by means of the physical keypad, the physical keypad can still be held in the original position separated from the display screen, or displaced over the display screen to overlap the displayed virtual keypad by such modes as sliding or folding, etc. To render the underlying virtual keypad transmissive and visible, the physical keypad can be made of transparent or translucent material; alternatively, each of the keys thereon can be partially hollowed out.

### [Third Embodiment]

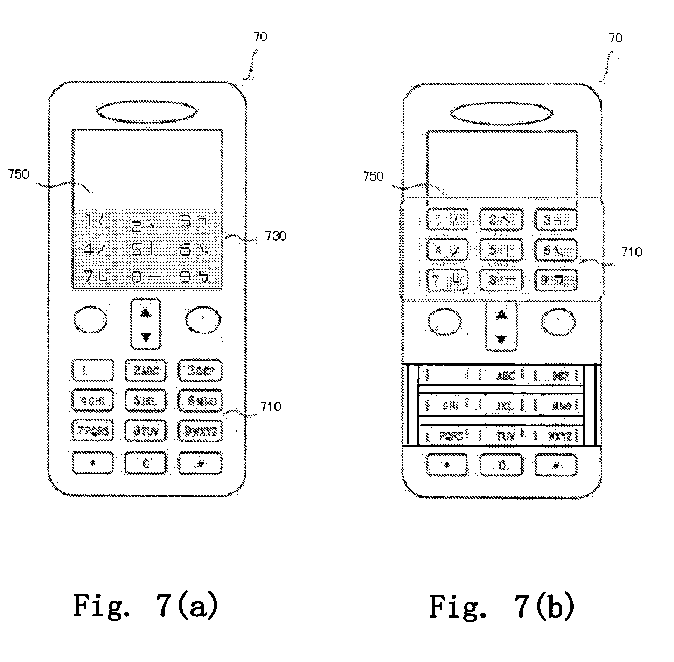

Fig. 7 illustrates combination of a transparent physical keypad with a virtual keypad.

As shown in Fig. 7 (a), in the case the virtual keypad of the electronic apparatus 70 is not invoked, the physical keypad 710 is usually located at the original position under the display screen 750.

When the virtual keypad 730 is invoked, the display screen 750 is divided into an upper portion and a lower portion, and the virtual keypad 730 is displayed in the lower portion, while the opposing upper portion is used to display compiled contents.

At this time, the user can softly pull the physical keypad 710 down to release a slide stopper (not shown) that arrests displacement of the physical keypad 710 and/or to transport the physical keypad 710 to a sliding track (not shown). The physical keypad 710 is slightly raised from the original position to be slightly higher than the upper surface of the display screen 750. Subsequently, the physical keypad 710 can automatically, or is pulled manually by the user to, slide over the display screen 750, and stop sliding and be held at a position when its lower side line superimposes the lower side line of the display screen 750 (or the virtual keypad 730 displayed thereon).

Since the physical keypad 710 is made of a transparent material, the underlying virtual keypad 730 can be visibly transmissive as shown in Fig. 7 (b). The transparent physical keypad superimposes the virtual keypad, with their keys corresponding to one another in a one-by-one basis; at the same time, the internal component parts of the electronic apparatus 70 combine the keys of the physical keypad 710 with the invoked virtual keypad 730 in a likewise correlation. Thus, an action with which the user operates the physical keypad 710 is calculated by the electronic apparatus 70 to be a corresponding operation on the virtual keypad 730, so that the operation on the virtual keypad is visually direct and convenient, and comfortable hand feel of the physical keypad is also maintained.

The virtual keypad displayed by the display section is not restricted to being operated by means of the physical keypad of the electronic apparatus. For instance, when the display screen of the electronic apparatus is a touch screen, it is also possible to operate by means of the touch screen. Alternatively, when the electronic apparatus is connected to a computer, it is also possible to operate the virtual screen with such devices as a computer keyboard, a mouse, a computer touch screen, and an induction pen.

In order to cooperate with the keypad operated in combination of the display section and the keying section, the electronic apparatus according to the present invention should also include the following component parts: a selection section, a reception section, a calculation section, a storage section, and a display control section.

Of these, the selection section selects a corresponding language in accordance with a command inputted by the user, invokes the display section, and displays the virtual keypad on the display screen of the electronic apparatus or other usable display means. By way of simplification, if an electronic apparatus is tailor-made with a virtual keypad of only one language, the command of the user can be set by default to directly initiate the virtual keypad.

After initiation of the virtual keypad, the reception section receives information of the user operating the keying section; specifically, the reception section receives information of the user concerning compiling operation on the corresponding language. Dependent upon different operational modes, the reception section may include a signal-receiving device such as a pressure sensor for the physical keypad, a detection device for a touch screen of the electronic apparatus or the computer, or a data line connected to the electronic apparatus, and the like; and a device for converting a received signal into an electric signal.

The reception section outputs the converted electric signal, and the calculation section receives the electric signal, calculates as to which key on the virtual keypad should be corresponded by each operation of the user in accordance with the electric signal and on the basis of computational rules stored in the storage section, and transmits the calculation result to the storage section and the display control section.

The storage section stores corresponding rules between operations of the user and the virtual keypad, and such corresponding rules should be consistent with relevant display on the virtual keypad. The storage section further stores the language being compiled by the user. For instance, a ROM is used to store the corresponding rules, and a RAM is used to store the language being compiled.

The display control section receives the result calculated by the calculation section, and bases on this result to correspondingly display character contents compiled by the keypad in combination of the display section and the keying section. Such display can either be on the display screen of the electronic apparatus or on other usable display means.

For instance, when the user of the electronic apparatus intends to compile Chinese contents, the selection section initiates the Chinese virtual keypad in accordance with the selection of the user, and displays the keypad on the lower portion of the display screen of the electronic apparatus. When the user makes use of the physical keypad of the electronic apparatus itself to compile on the Chinese virtual keypad as shown in Fig. 5, the pressure sensor of the reception section senses an action by which the user presses the key, and converts the action into a corresponding electric signal. In the case the key is valid (i.e. there is correlation between the pressed key and a key on the virtual keypad), the calculation section calculates the key on the virtual keypad to which the key-pressing corresponds, and transmits the calculation result to the storage section and the display control section. The display control section performs corresponding display on the upper portion of the display screen of the electronic apparatus, while the storage section simultaneously records the currently compiled contents. For instance, when the user presses key "8" on the physical keypad, the calculation sections calculates the corresponding key "—" on the virtual keypad, and the display control section displays the character "—" on the display screen of the electronic apparatus.

In addition, the selection section can also select the operational modes to the display section, for example, such modes as operation of the physical keypad itself, operation of the computer keyboard, and operation of the touch screen, etc., so as to enable the calculation section to invoke different virtual key computational rules from the storage section corresponding to different key arrangements of the virtual keypad of the same and single language.

Besides being displayed on the display screen of the electronic apparatus itself as exemplified above, the display section according to the present invention can also be displayed by means of any display means associated with the electronic apparatus; for instance, it can be displayed on the display screen of a computer connected to the electronic apparatus, or displayed in a projected manner in association with the electronic apparatus, for instance, displayed by a projector connected to the electronic apparatus, or displayed by a projection means of the electronic apparatus itself.

Alternatively, a separate display screen can also be provided to dedicate to the display of the display section independent of the main display screen that displays operation contents according to the prior art.

In addition to the specific language part and the numeral part, the virtual keypad according to the present invention can also include a basic language part and any parts on the physical keypad. For instance, the Latin alphabets on the physical keypad can be virtualized on the virtual keypad. Control keys, function keys, and the like on the physical keypad can also be virtualized on the virtual keypad.

The virtual keypad can be combined with the physical keypad to make up a complete keypad, in other words, it is possible to compile (Arabic) numerals and (Latin) alphabets by means of the physical keypad, and to compile the local language by the virtual keypad. In the case Latin alphabets and punctuations are also virtualized on the virtual keypad, it is also possible to compile all character contents by means of the virtual keypad. In the case all keys on the physical keypad are virtualized on the virtual keypad, it is also possible to operate with regard to the virtual keypad alone, i.e. each operation on the keying section is directed to the contents displayed by the display section.

The display section according to the present invention is also not restricted to displaying virtual language keypad, as it is also possible to aim at any contents needed by the user, such as punctuations, tabulation symbols, unit symbols, graphic symbols, and even secret symbols tailor-made by the user.

Detailed explanation is made above to the present invention in combination with embodiments as illustrated in the drawings. However, as should be understood to persons ordinarily skilled in the art, the details as described above shall not be explained to restrict the present invention, but are directed to various modifications and variations capable of being made within the scope without departing from technical concepts of the present invention. The scope of the present invention is defined by the claims alone, and covers all alterations, improvements and equivalents within the scope of the claims.

For instance, the present invention is described above with the mobile phone keypad as an example, but the present invention is not restricted to the mobile phone keypad, instead, the present invention can be implemented as any other electronic apparatuses including keypads.

Moreover, it is possible for the present invention to extract and combine each of the essentials therein within the scope as defined in the claims.

## Claims

1. A keypad for an electronic apparatus (70) operative to input a basic language part and a specific language part to the electronic apparatus, comprising:
a sliding track;
a keying section (710) provided with a plurality of keys and mounted on the sliding track; and
a display section (730) for displaying the specific language part in association with at least part of the plurality of keys,
the keying section having a first position for input of the basic language part, wherein the keying section does not overlap with the display section in the first position, and
the keying section having a second position for input of the specific language part, wherein the keying section is operable to slide along the sliding track to be overlapped with the display section in the second position, so that the plurality of keys correspond to the specific language part displayed on the display section.

2. The keypad for an electronic apparatus according to claim 1, wherein, when the keying section (710) is overlapped with the display section (730), the display section underlies the keying section, so that the specific language part displayed on the display section can be viewed though the keys of the keying section from outside.

3. The keypad for an electronic apparatus according to claim 2, wherein at least part of the keys are made of transparent material or translucent material.

4. The keypad for an electronic apparatus according to claim 2, wherein at least part of the keys are hollowed out.

5. The keypad for an electronic apparatus according to claim 1, wherein the plurality of keys have their own marks including a numeral part, the basic language part and control key part.

6. The keypad for an electronic apparatus according to claim 5, wherein:
the numeral part is an Arabic numeral part, and
the basic language part is a Latin alphabet part.

7. The keypad for an electronic apparatus according to claim 1, wherein the specific language part includes local linguistic alphabets and/or local linguistic strokes of a user.

8. An electronic apparatus (70) comprising the keypad (710, 730) according to any one of claims 1-7.

## Patentansprüche

1. Tastenfeld für eine elektronische Vorrichtung (70), das funktioniert, um einen Basissprachteil und einen spezifischen Sprachteil in die elektronische Vorrichtung einzugeben, umfassend:
eine Gleitschiene;
einen Tastenabschnitt (710), der mit einer Mehrzahl von Tasten versehen und auf der Gleitschiene montiert ist; und
einen Anzeigeabschnitt (730) zum Anzeigen des spezifischen Sprachteils in Verbindung mit wenigstens einem Teil der Mehrzahl von Tasten,
wobei der Tastenabschnitt eine erste Position zur Eingabe des Basissprachteils aufweist, wobei sich der Tastenabschnitt in der ersten Position nicht mit dem Anzeigeabschnitt überlappt, und
der Tastenabschnitt eine zweite Position zur Eingabe des spezifischen Sprachteils aufweist, wobei der Tastenabschnitt betätigt werden kann, um die Gleitschiene entlang zu gleiten, um in der zweiten Position mit dem Anzeigeabschnitt überlappt zu werden, so dass die Mehrzahl von Tasten dem spezifischen Sprachteil entspricht, der auf dem Anzeigeabschnitt angezeigt wird.

2. Tastenfeld für eine elektronische Vorrichtung nach Anspruch 1, wobei, wenn der Tastenabschnitt (710) mit dem Anzeigeabschnitt (730) überlappt ist, der Anzeigeabschnitt unter dem Tastenabschnitt liegt, so dass der spezifische Sprachteil, der auf dem Anzeigeabschnitt angezeigt wird, durch die Tasten des Tastenabschnitts von außen zu sehen ist.

3. Tastenfeld für eine elektronische Vorrichtung nach Anspruch 2, wobei wenigstens ein Teil der Tasten aus durchsichtigem Material oder durchscheinendem Material hergestellt ist.

4. Tastenfeld für eine elektronische Vorrichtung nach Anspruch 2, wobei wenigstens ein Teil der Tasten ausgehöhlt ist.

5. Tastenfeld für eine elektronische Vorrichtung nach Anspruch 1, wobei die Mehrzahl von Tasten ihre eigenen Aufschriften aufweist, einschließlich eines Ziffernteils, des Basissprachteil und eines Steuertastenteils.

6. Tastenfeld für eine elektronische Vorrichtung nach Anspruch 5, wobei:
der Ziffernteil ein Teil mit arabischen Ziffern ist, und
der Basissprachteil ein Teil mit lateinischem Alphabet ist.

7. Tastenfeld für eine elektronische Vorrichtung nach Anspruch 1, wobei der spezifische Sprachteil lokale linguistische Alphabete und/oder lokale linguistische Strichzeichen eines Benutzers umfasst.

8. Elektronische Vorrichtung (70), umfassend das Tastenfeld (710, 730) nach einem der Ansprüche 1 bis 7.

## Revendications

1. Clavier pour appareil électronique (70) servant à entrer une partie langue de base et une partie langue spécifique dans l'appareil électronique, comprenant :
une glissière ;
une section de saisie au clavier (710) pourvue d'une pluralité de touches et montée sur la glissière ; et
une section d'affichage (730) pour afficher la partie langue spécifique en association avec au moins une partie de la pluralité de touches,
la section de saisie au clavier comportant une première position pour entrée de la partie langue de base, la section de saisie au clavier n'étant pas en chevauchement avec la section d'affichage dans la première position, et
la section de saisie au clavier comportant une seconde position pour entrée de la partie langue spécifique, la section de saisie au clavier étant apte à coulisser le long de la glissière pour être en chevauchement avec la section d'affichage dans la seconde position, de manière que la pluralité de touches corresponde à la partie langue spécifique affichée sur la section d'affichage.

2. Clavier pour appareil électronique selon la revendication 1, dans lequel, lorsque la section de saisie au clavier (710) est en chevauchement avec la section d'affichage (730), la section d'affichage est située en dessous de la section de saisie au clavier, de manière que la partie langue spécifique affichée sur la section d'affichage soit visible à travers les touches de la section de saisie au clavier depuis l'extérieur.

3. Clavier pour appareil électronique selon la revendication 2, dans lequel au moins une partie des touches sont faites d'un matériau transparent ou d'un matériau translucide.

4. Clavier pour appareil électronique selon la revendication 2, dans lequel au moins une partie des touches sont évidées.

5. Clavier pour appareil électronique selon la revendication 1, dans lequel la pluralité de touches comportent leur propre symbole dont une partie chiffre, la partie langue de base et la partie touche de commande.

6. Clavier pour appareil électronique selon la revendication 5, dans lequel :
la partie chiffre est une partie chiffres arabes, et
la partie langue de base est une partie alphabet latin.

7. Clavier pour appareil électronique selon la revendication 1, dans lequel la partie langue spécifique comprend des alphabets de langues du pays et/ou des traits de langues du pays d'un utilisateur.

8. Appareil électronique (70) comprenant le clavier (710, 730) selon l'une quelconque des revendications 1 à 7.
